# EUROPÄISCHE PATENTSCHRIFT

(11) **EP 2 585 348 B1**
(45) Veröffentlichungstag und Bekanntmachung des Hinweises auf die Patenterteilung: **11.03.2015**
(21) Anmeldenummer: 11717645.3
(22) Anmeldetag: 04.05.2011
(51) Int. Cl.: B60W 30/18, B60W 10/06, B60W 10/02, B60W 30/14

(54) **VERFAHREN ZUR FAHRBETRIEBSSTEUERUNG EINES KRAFTFAHRZEUGS**
METHOD FOR CONTROLLING THE DRIVING MODE OF A MOTOR VEHICLE
PROCÉDÉ DE COMMANDE DU MODE D'ENTRAÎNEMENT D'UN VÉHICULE

(30) Priorität: 22.06.2010 DE 102010030346
(43) Veröffentlichungstag der Anmeldung: 01.05.2013
(73) Patentinhaber: ZF Friedrichshafen AG, 88038 Friedrichshafen (DE)
(72) Erfinder: WÜRTHNER, Maik, 88677 Markdorf (DE); MAIER, Alexander, 88046 Friedrichshafen (DE); STAUDINGER, Joachim, 87700 Memmingen (DE); KEMLER, Johannes, 882121 Ravensburg (DE)
(86) Internationale Anmeldenummer: PCT/EP2011/057116
(87) Internationale Veröffentlichungsnummer: WO 2011/160878

(56) Entgegenhaltungen:
- DE-A1-102004 017 115

## Beschreibung

Die Erfindung betrifft ein Verfahren zur Fahrbetriebssteuerung eines Kraftfahrzeugs, dessen Antriebsstrang weitgehend automatisiert ist und einen als Verbrennungsmotor ausgebildeten Antriebsmotor, ein stufenweise oder stufenlos verstellbares Fahrgetriebe, und mindestens eine zwischen dem Antriebsmotor und dem Fahrgetriebe angeordnete Trennkupplung umfasst, wobei während einer Fahrt bei Vorliegen bestimmter Betriebsbedingungen und eines geeigneten, anhand von Topographiedaten und Fahrzeugparametern für einen vorausliegenden Streckenabschnitt berechneten Geschwindigkeitsverlaufs der Antriebsstrang geöffnet und die Fahrt bis zum Auftreten eines Abbruchsignals im Segelbetrieb fortgesetzt wird.

Generell besteht bei der Entwicklung neuer Kraftfahrzeuge und der Weiterentwicklung vorhandener Kraftfahrzeuge, insbesondere auch von Nutzfahrzeugen, die Zielsetzung, den Kraftstoffverbrauch sowie die Schadstoff- und CO₂-Emissionen zu senken. Neben der technischen Optimierung der Kraftfahrzeuge, wie der Entwicklung von verbrauchs- und emissionsarmen Antriebsmotoren, von wirkungsgradoptimierten vielstufigen Schaltgetrieben, von rollwiderstandsarmen Reifen und von strömungsgünstigen Karosserien bzw. von LKW-Fahrerhäusern und LKW-Aufbauten, besteht eine weitere Möglichkeit zur Reduzierung des Kraftstoffverbrauchs und der Schadstoff- und CO₂⁻ Emissionen in einer geeigneten Fahrbetriebssteuerung beim Einsatz der Kraftfahrzeuge.

Hierzu kann vorgesehen sein, ein Kraftfahrzeug während einer Fahrt in geeigneten Betriebssituationen vorübergehend im so genannten Rollbetrieb oder im so genannten Segelbetrieb zu betreiben. Im Rollbetrieb bleibt der Antriebsstrang geschlossen, d.h. der in dem Fahrgetriebe eingelegte Gang bleibt eingelegt bzw. die eingestellte Übersetzung bleibt eingestellt und die Trennkupplung bleibt eingerückt. Es wird lediglich die Kraftstoffzufuhr des Antriebsmotors abgestellt. Da der Antriebsmotor in diesem Fall in den Schleppbetrieb übergeht und somit das Schleppmoment des Antriebsmotors als Bremskraft auf die Antriebsräder wirkt, ist ein längerer Rollbetrieb praktisch nur beim Befahren einer leichten Gefällstrecke, beim Überfahren einer Bergkuppe, und beim Durchfahren einer Senke möglich, bei dem die auf das Kraftfahrzeug wirksame Hangabtriebskraft zumindest im zeitlichen Mittel weitgehend durch den Rollwiderstand des Kraftfahrzeugs und die Bremskraft des Antriebsmotors kompensiert wird.

Dagegen wird der Antriebsstrang im Segelbetrieb geöffnet, was durch das Ausrücken der Trennkupplung und/oder durch das Einlegen der Neutralstellung im Fahrgetriebe erfolgen kann. Der Antriebsmotor wird dann zumeist im Leerlauf betrieben, er kann jedoch, sofern er nicht zum Antrieb sicherheitsrelevanter und/oder komfortrelevanter Aggregate, wie der Servopumpe einer Servolenkung oder des Klimakompressors einer Klimaanlage, benötigt wird, auch ganz abgeschaltet werden. Aufgrund des in diesem Fall nicht wirksamen Schleppmomentes des Antriebsmotors ist eine längere antriebslose Vortriebsphase bzw. Segelbetrieb häufiger und bei unterschiedlichen Streckenprofilen möglich.

Allgemein ist es jedoch schwierig, neben den grundsätzlichen aktuellen Betriebsbedingungen, die für das Auslösen eines Segelbetriebs erfüllt sein müssen, streckenspezifische Kriterien zu definieren, zu erfassen und auszuwerten, die einen Übergang in den Segelbetrieb unter wirtschaftlichen und komfortorientierten Aspekten als sinnvoll erscheinen lassen. Für einen Segelbetrieb zu erfüllende aktuelle Betriebsbedingungen umfassen einen laufenden Antriebsmotor, eine über einer festgelegten Mindestgeschwindigkeit liegende aktuelle Fahrgeschwindigkeit, eine nicht vorliegende Beschleunigungsanforderung (nicht betätigtes Fahrpedal und/oder keine Motormomentanforderung eines aktivierten Tempomaten), eine nicht vorliegende Verzögerungsanforderung (nicht betätigtes Bremspedal und/oder keine Bremsmomentanforderung eines aktivierten Tempomaten), und gegebenenfalls eine zwischen einem zulässigen Maximalgefälle und einer zulässigen Maximalsteigung liegende aktuelle Fahrbahnneigung.

Diesbezügliche Bedingungen sind beispielsweise aus der DE 102 21 701 A1 bekannt, in der ein Verfahren zur Fahrbetriebssteuerung eines Kraftfahrzeugs beschrieben ist, mit dem durch eine Drehzahlanpassung des Antriebsmotors eine schnelle und weitgehend ruckfreie Beendigung eines Segelbetriebs ermöglicht werden soll.

Da die Erfüllung dieser Bedingungen für einen längeren und wirtschaftlich lohnenden Segelbetrieb alleine nicht ausreicht, ist die Erfüllung mindestens eines weiteren Kriteriums erforderlich, das sich vorteilhaft auf einen unmittelbar vor dem Kraftfahrzeug befindlichen und von diesem nachfolgend mit hoher Wahrscheinlichkeit befahrenen Streckenabschnitt bezieht.

In der DE 10 2004 017 115 A1 ist ein Verfahren nach dem Oberbegriff des Anspruchs 1 zur Fahrbetriebssteuerung eines Kraftfahrzeugs beim Betrieb einer Geschwindigkeitsregelanlage beschrieben, bei dem das Kraftfahrzeug periodisch bei geschlossenem Antriebsstrang mittels des Antriebsmotors auf eine über der Sollgeschwindigkeit liegende obere Grenzgeschwindigkeit beschleunigt und anschließend im Roll- oder Segelbetrieb bis auf eine unter der Sollgeschwindigkeit liegende untere Grenzgeschwindigkeit verzögert wird. Bei starkem Fahrbahngefälle soll das Kraftfahrzeug im Rollbetrieb, d.h. mit geschlossenem Antriebsstrang und abgestellter Kraftstoffzufuhr des Antriebsmotors, verzögert werden. Bei geringerem Fahrbahngefälle soll das Kraftfahrzeug im Segelbetrieb, d.h. mit geöffnetem Antriebsstrang, verzögert werden, wobei ein Abstellen des Antriebsmotors nur dann vorgesehen ist, wenn die voraussichtliche Dauer der Verzögerungsphase eine vorgegebene Zeitspanne überschreitet oder sich das Kraftfahrzeug unmittelbar vor einer Gefällestrecke befindet. Zur verbrauchs- und emissionsoptimierten Steuerung der Abfolge der Beschleunigungs- und Verzögerungsphasen sollen auch topographische Parameter berücksichtigt werden.

In der DE 10 2006 054 327 A1 ist dagegen ein Verfahren zur Fahrbetriebssteuerung eines Kraftfahrzeugs offenbart, gemäß dem die aktuelle Fahrzeugposition und die aktuelle Fahrgeschwindigkeit des Kraftfahrzeugs erfasst und mit Daten einer digitalen Straßenkarte, insbesondere mit Fahrbahnneigungen und Geschwindigkeitsbegrenzungen von vor dem Kraftfahrzeug befindlichen Fahrstreckenabschnitten, verarbeitet werden, um einen optimalen Startpunkt zur Auslösung eines Segelbetriebs zu ermitteln. Durch eine Vorausberechnung der Ausrollgeschwindigkeit im Segelbetrieb soll der Startpunkt zur Auslösung des Segelbetriebs derart bestimmt werden, dass vorausliegenden Streckenabschnitten zugeordnete Geschwindigkeitsbegrenzungen ohne die Betätigung einer Bremse (Betriebsbremse oder Retarder) eingehalten werden können.

Schließlich ist in der DE 10 2008 023 135 A1 ein Verfahren zur Fahrbetriebssteuerung eines Kraftfahrzeugs beschrieben, nach dem während einer Fahrt fortlaufend die aktuelle Fahrgeschwindigkeit des Kraftfahrzeugs, die Rolleigenschaften des Kraftfahrzeugs repräsentierende Fahrzeugparameter, und topographische Daten der Fahrstrecke erfasst und daraus der im Rollbetrieb, d.h. mit geschlossenem Antriebsstrang und abgestellter Kraftstoffzufuhr des Antriebsmotors, zu erwartende Geschwindigkeitsverlauf innerhalb eines vorausliegenden Streckenabschnitts berechnet wird. Abhängig von dem jeweiligen Geschwindigkeitsverlauf relativ zu einer Maximalgeschwindigkeit und einer Minimalgeschwindigkeit wird entschieden, ob ein Rollbetrieb gestartet, gesperrt oder beendet wird. Aus dem berechneten Geschwindigkeitsverlauf soll eine Bergkuppe oder eine Senke erkannt und der Beginn des Rollbetriebs derart bestimmt werden, dass eine Bergkuppe ohne die Unterschreitung der Minimalgeschwindigkeit und eine Senke ohne die Überschreitung der Maximalgeschwindigkeit jeweils im Rollbetrieb durchfahren wird sowie die Rollgeschwindigkeit am Ende des Rollbetriebs weitgehend der Fahrgeschwindigkeit zu Beginn des Rollbetriebs oder der Sollgeschwindigkeit einer aktivierten Geschwindigkeitsregelanlage entspricht.

In den vorgenannten Verfahren werden aber jeweils nur Teilaspekte zur Auslösung oder Beendigung des Roll- oder Segelbetriebs eines Kraftfahrzeugs behandelt. Ebenso ist die Definition der zur Beurteilung des jeweils berechneten Geschwindigkeitsverlaufs verwendeten Grenz- bzw. Minimal- und Maximalgeschwindigkeiten unklar. Ein weiterer Nachteil der bekannten Verfahren besteht darin, dass dort jeweils vergleichsweise harte Kriterien zur Auslösung und Beendigung eines Roll- oder Segelbetriebs vorgesehen sind, bei denen auftretende sprunghafte Änderungen des berechneten Geschwindigkeitsverlaufs, die von Signalstreuungen und Signalstörungen verursacht sein können, nicht berücksichtigt werden. Dies kann dazu führen, dass ein Roll- oder Segelbetrieb in kurzer Folge mehrfach gestartet und wieder beendet wird, wodurch der Umfang der möglichen Energieeinsparung deutlich reduziert und der Fahrkomfort beeinträchtigt wird.

Der Erfindung liegt daher die Aufgabe zugrunde, ein Verfahren zur Fahrbetriebssteuerung eines Kraftfahrzeugs der eingangs genannten Art vorzuschlagen, mit dem in wirtschaftlicher und komfortorientierter Hinsicht verbesserte Kriterien für die Freigabe und das Sperren eines Segelbetriebs des Kraftfahrzeugs zur Verfügung gestellt werden.

Diese Aufgabe ist in Verbindung mit den Merkmalen des Oberbegriffs des Anspruchs 1 dadurch gelöst, dass der für den Fall eines sofortigen Öffnens des Antriebsstrangs berechnete Geschwindigkeitsverlauf v_{F}(x_{FS}) fortlaufend an äquidistant aufeinanderfolgenden Wegpunkten der Fahrstrecke X_{FS} ermittelt und jeweils in Bezug auf eine untere Grenzgeschwindigkeit V_{Gr_U} und eine obere Grenzgeschwindigkeit v_{Gr_O} bewertet wird, und dass der Segelbetrieb nur dann freigegeben wird, wenn das Bewertungsergebnis bei einer festgelegten Mindestanzahl n_{X_Min} aufeinanderfolgender Wegpunkte jeweils positiv ist.

Vorteilhafte Ausgestaltungen und Weiterbildungen des erfindungsgemäßen Verfahrens sind Gegenstand der Unteransprüche.

Die Erfindung geht demnach aus von einem Kraftfahrzeug, beispielsweise einem Nutzfahrzeug, dessen Antriebsstrang weitgehend automatisiert ist und einen als Verbrennungsmotor ausgebildeten Antriebsmotor, ein stufenweise oder stufenlos verstellbares Fahrgetriebe, und mindestens eine zwischen dem Antriebsmotor und dem Fahrgetriebe angeordnete Trennkupplung aufweist. Um den Kraftstoffverbrauch sowie die Schadstoff- und CO²-Emissionen eines derartigen Kraftfahrzeugs weiter zu senken, soll während einer Fahrt bei Vorliegen bestimmter Betriebsbedingungen und eines geeigneten, anhand von Topographiedaten und Fahrzeugparametern für einen vorausliegenden Streckenabschnitt berechneten Geschwindigkeitsverlaufs V_{F}(X_{FS}) der Antriebsstrang geöffnet und die Fahrt bis zum Auftreten eines Abbruchsignals im Segelbetrieb, d.h. mit einem im Leerlauf betriebenen oder ganz abgestellten Antriebsmotor, fortgesetzt werden.

Da der berechnete Geschwindigkeitsverlauf v_{F}(x_{FS}) insbesondere aufgrund von ungenauen oder teilweise fehlenden Höhendaten des vorausliegenden Streckenabschnitts mit gewissen Ungenauigkeiten und sprunghaften Änderungen versehen sein kann, ist erfindungsgemäß vorgesehen, dass die spontane Einleitung eines Segelbetriebs aufgrund des Auftretens einer ersten positiven Bewertung des berechneten Geschwindigkeitsverlaufs v_{F}(x_{FS}) verhindert wird. Stattdessen wird der Segelbetrieb erst dann freigegeben, wenn das Bewertungsergebnis bei einer festgelegten Mindestanzahl n_{X_Min} äquidistant aufeinanderfolgender Wegpunkte, an denen die Berechnung und Bewertung des Geschwindigkeitsverlaufs v_{F}(x_{FS}) wiederholt wird, jeweils positiv ausgefallen ist.

Hierdurch wird in einer Art Entprellungs- oder Dämpfungsfunktion erreicht, derart, dass der Segelbetrieb aufgrund wechselnder Bewertungsergebnisse nicht mehrfach gestartet und wieder beendet wird, sondern nur dann gestartet wird, wenn dies unter wirtschaftlichen und komfortorientierten Aspekten sinnvoll ist, d.h. der Segelbetrieb mit hoher Wahrscheinlichkeit über eine gewisse Fahrstrecke oder Fahrzeit beibehalten werden kann. Diese Zielsetzung wird auch durch geeignete Bewertungskriterien des jeweils berechneten Geschwindigkeitsverlaufs v_{F}(x_{FS}) unterstützt, die nachfolgend näher erläutert werden.

Damit das erfindungsgemäße Verfahren selbsttätig an unterschiedliche Streckenprofile angepasst wird, ist zweckmäßig vorgesehen, dass die Mindestanzahl n_{X_Min} aufeinanderfolgender Wegpunkte zur Freigabe des Segelbetriebs in Abhängigkeit von dem Höhenprofil des vorausliegenden Streckenabschnitts und/oder des dafür berechneten Geschwindigkeitsverlaufs v_{F}(x_{FS}) variabel bestimmt wird.

Da es an einem Gefälleauslauf und an einem Beginn einer Senke darauf ankommt, den Antriebsstrang möglichst früh zu öffnen, um die kinetische Energie des Kraftfahrzeugs optimal auszunutzen, wird die Mindestanzahl aufeinanderfolgender Wegpunkte n_{X_Min} zur Freigabe des Segelbetriebs ausgehend von einem Standardwert vorteilhaft reduziert, wenn anhand des Höhenprofils des vorausliegenden Streckenabschnitts und/oder des daraus berechneten Geschwindigkeitsverlaufs v_{F}(x_{FS}) ein Gefälleauslauf oder der Beginn einer Senke erkannt wird.

Im Fahrpedalbetrieb wird zweckmäßig eine um eine festgelegte untere Geschwindigkeitsdifferenz Δv_{U} unter der aktuellen Fahrgeschwindigkeit v_{F}(0) liegende Geschwindigkeit als untere Grenzgeschwindigkeit (v_{Gr_U} = v_{F}(0) - Δ_{VU}) und eine um eine festgelegte obere Geschwindigkeitsdifferenz Δv_{O} über der aktuellen Fahrgeschwindigkeit v_{F}(0) liegende Geschwindigkeit als obere Grenzgeschwindigkeit (v_{Gr_O} = v_{F}(0) + Δv_{O}) verwendet, wobei die untere Geschwindigkeitsdifferenz Δv_{U} und die obere Geschwindigkeitsdifferenz Δv_{O} wahlweise gleich groß oder unterschiedlich groß bestimmt sein können.

Im Tempomatbetrieb bzw. Geschwindigkeitsregelanlagenbetrieb, d.h. bei an sich aktiviertem, aber aufgrund des geöffneten Antriebsstrangs während des Segelbetriebs deaktiviertem Tempomat, wird diejenige Geschwindigkeit, bei welcher der Tempomat ein Motormoment anfordern würde, als untere Grenzgeschwindigkeit v_{Gr} und diejenige Geschwindigkeit, bei welcher der Tempomat ein Bremsmoment anfordern würde, als obere Grenzgeschwindigkeit v_{Gr_O} verwendet.

Bei der Festlegung der unteren Grenzgeschwindigkeit v_{Gr_U} bzw. der oberen Grenzgeschwindigkeit v_{Gr_O} kann zu der Geschwindigkeit, bei welcher der Tempomat ein Motormoment anfordern würde bzw. zu der Geschwindigkeit, bei welcher der Tempomat ein Bremsmoment anfordern würde ein parametrierbarer Offset-Wert addiert bzw. subtrahiert werden.

Wenn innerhalb des vorausliegenden Streckenabschnitts eine Geschwindigkeitsbegrenzung v_{Lim} beginnt, ist es sinnvoll, dass zumindest die obere Grenzgeschwindigkeit v_{Gr_O} über eine festgelegte Anpassungsstrecke Δx_{Mod} stetig auf die Geschwindigkeitsbegrenzung v_{Lim} abgesenkt wird, sofern diese unterhalb der oberen Grenzgeschwindigkeit liegt (v_{Lim} < v_{Gr_O}).

Wenn die Geschwindigkeitsbegrenzung v_{Lim} jedoch auch unterhalb der unteren Grenzgeschwindigkeit liegt (v_{Lim} < v_{Gr_U}), so müsste auch diese in geeigneter Weise abgesenkt werden. Eine in dem vorausliegenden Streckenabschnitt beginnende Geschwindigkeitsbegrenzung v_{Lim} kann einer digitalen Straßenkarte entnommen werden oder durch die Erkennung entsprechender Verkehrsschilder rechtzeitig durch eine Umfeldüberwachungseinrichtung erkannt werden. Des Weiteren ist es möglich, Bereiche mit einer Geschwindigkeitsbegrenzung v_{Lim}, wie z.B. Ortsdurchfahrten, kurvenreiche Strecken oder Baustellenbereiche, bei wiederholtem Durchfahren derselben Wegstrecke zu erlernen und in geeigneter Weise abzuspeichern.

Das Bewertungsergebnis des berechneten Geschwindigkeitsverlaufs v_{F}(x_{FS}) ist positiv, wenn der berechnete Geschwindigkeitsverlauf v_{F}(x_{FS}) innerhalb des vorausliegenden Streckenabschnitts die untere Grenzgeschwindigkeit v_{Gr_U} nicht unterschreitet und die obere Grenzgeschwindigkeit v_{Gr_O} nicht überschreitet, was einem idealen Segelbetrieb des Kraftfahrzeugs mit weitgehend konstanter Fahrgeschwindigkeit, d.h. bei leicht abschüssiger Fahrbahn, entspricht. Andernfalls ist das Bewertungsergebnis des berechneten Geschwindigkeitsverlaufs v_{F}(x_{FS}) negativ.

Das Bewertungsergebnis des berechneten Geschwindigkeitsverlaufs v_{F}(x_{FS}) ist gemäß der Erfindung aber auch dann positiv, wenn der berechnete Geschwindigkeitsverlauf v_{F}(x_{FS}) innerhalb des vorausliegenden Streckenabschnitts die untere Grenzgeschwindigkeit v_{Gr_U} unterschreitet und anschließend wieder überschreitet, sofern die Unterschreitung in nicht mehr als einer vorgegebenen tolerierbaren Anzahl n_{X_Tol_U} aufeinanderfolgender Wegpunkte auftritt und innerhalb einer vorgegebenen tolerierbaren Geschwindigkeitsdifferenz Δv_{Tol_U} liegt. Durch die positive Bewertung wird in diesem Fall erreicht, dass eine kleine Bergkuppe vollständig im Segelbetrieb überfahren werden kann, ohne dabei zu viel Zeit zu verlieren oder mit weitgehend konstanter Fahrgeschwindigkeit nachfolgende Kraftfahrzeuge zu behindern.

Ebenso kann das Bewertungsergebnis des berechneten Geschwindigkeitsverlaufs v_{F}(x_{FS}) auch dann als positiv angesehen werden, wenn der berechnete Geschwindigkeitsverlauf v_{F}(x_{FS}) innerhalb des vorausliegenden Streckenabschnitts die obere Grenzgeschwindigkeit v_{Gr_O} überschreitet und anschließend wieder unterschreitet, sofern die Überschreitung in nicht mehr als einer vorgegebenen tolerierbaren Anzahl n_{X_Tol_O} aufeinanderfolgender Wegpunkte auftritt und innerhalb einer vorgegebenen tolerierbaren Geschwindigkeitsdifferenz Δv_{Tol_O} liegt. Durch die positive Bewertung wird in diesem Fall erreicht, dass eine Senke im Segelbetrieb durchfahren werden kann, ohne dabei zu schnell zu werden und ohne auf gegebenenfalls mit weitgehend konstanter Fahrgeschwindigkeit vorausfahrende Kraftfahrzeuge aufzufahren.

Das Bewertungsergebnis des berechneten Geschwindigkeitsverlaufs v_{F}(x_{FS}) kann jedoch auch positiv sein, wenn bei einem negativen Gradienten des berechneten Geschwindigkeitsverlaufs v_{F}(x_{FS}), d.h. bei einer Verzögerung des Kraftfahrzeugs, am Ende des vorausliegenden Streckenabschnitts der über den letzten Wegpunkt des vorausliegenden Streckenabschnitts hinaus linear extrapolierte Geschwindigkeitsverlauf v_{XP}(X_{FS}) die untere Grenzgeschwindigkeit v_{Gr_U} erst oberhalb einer festgelegten Mindestanzahl n_{XP_Min_U} aufeinanderfolgender Wegpunkte überschreitet. Die Anwendung dieses Kriteriums ist dann sinnvoll, wenn zuverlässige topographische Daten nur für einen kürzeren vorausliegenden Streckenabschnitt verfügbar sind. Durch die Extrapolation des berechneten Geschwindigkeitsverlaufs v_{F}(x_{FS}) wird dieser Streckenabschnitt nach vorne erweitert und somit eine mit einem für einen längeren vorausliegenden Streckenabschnitt berechneten Geschwindigkeitsverlauf v_{F}(x_{FS}) vergleichbare Bewertung ermöglicht.

Ebenso kann das Bewertungsergebnis des berechneten Geschwindigkeitsverlaufs v_{F}(x_{FS}) auch dann als positiv angesehen werden, wenn bei einem positiven Gradienten des berechneten Geschwindigkeitsverlaufs v_{F}(x_{FS}), d.h. bei einer Beschleunigung des Kraftfahrzeugs, am Ende des vorausliegenden Streckenabschnitts der über den letzten Wegpunkt des beurteilten Streckenabschnitts hinaus linear extrapolierte Geschwindigkeitsverlauf v_{XP}(x_{FS}) die obere Grenzgeschwindigkeit v_{Gr_O} erst oberhalb einer festgelegten Mindestanzahl n_{XP_Min_O} aufeinanderfolgender Wegpunkte überschreitet.

Das Bewertungsergebnis des berechneten Geschwindigkeitsverlaufs v_{F}(x_{FS}) kann jedoch auch dann positiv sein, wenn der berechnete Geschwindigkeitsverlauf v_{F}(x_{FS}) innerhalb des vorausliegenden Streckenabschnitts die untere Grenzgeschwindigkeit v_{Gr_U} oberhalb einer festgelegten Mindestanzahl n_{X_Min}__{U} aufeinanderfolgender Wegpunkte unterschreitet. Mit der Anwendung dieses Kriteriums wird erreicht, dass ein Segelbetrieb auch über eine Fahrstrecke möglich ist, die kürzer als derjenige Streckenabschnitt ist, welcher der Berechnung des Geschwindigkeitsverlaufs v_{F}(x_{FS}) zu Grunde liegende.

Ebenso kann das Bewertungsergebnis des berechneten Geschwindigkeitsverlaufs v_{F}(x_{FS}) als positiv bewertet werden, wenn der berechnete Geschwindigkeitsverlauf (v_{F}(x_{FS})) innerhalb des vorausliegenden Streckenabschnitts die obere Grenzgeschwindigkeit (v_{Gr_O}) oberhalb einer festgelegten Mindestanzahl (n_{X_Min_O}) aufeinanderfolgender Wegpunkte unterschreitet.

Es versteht sich in Kenntnis der Erfindung von selbst, dass anstelle der zuvor verwendeten Anzahl aufeinanderfolgender Wegpunkte (n_{X_Tol_U}, n_{X_Tol_O}, n_{XP_Min_U}, n_{XP_Min_O}, n_{X_Min_U}, n_{X_Min_O}) auch die entsprechenden Teilstrecken, die diese Wegpunkte enthalten, oder die entsprechenden Fahrzeiten, in denen diese Wegpunkte bzw. Teilstrecken durchfahren werden, verwendet werden können.

Unter normalen Betriebsbedingungen, d.h. ohne das Auftreten einer Motormomentanforderung oder Bremsmomentanforderung, die durch eine Betätigung des Fahrpedals oder Bremspedals von dem Fahrer oder von einem im Stand-By-Betrieb laufenden Tempomaten mit Umfeldüberwachung (Abstandsregelung) ausgelöst werden kann, wird der Segelbetrieb bei Erreichen der unteren Grenzgeschwindigkeit v_{Gr_U} oder der oberen Grenzgeschwindigkeit v_{Gr_O} durch die aktuelle Fahrgeschwindigkeit v_{F} oder durch den berechneten Geschwindigkeitsverlauf v_{F}(x_{FS}) beendet.

Um ein starkes Absinken der Fahrgeschwindigkeit v_{F} nach dem Ende des Segelbetriebs zu vermeiden, wird der Segelbetrieb zweckmäßig jedoch schon vor dem Erreichen der unteren Grenzgeschwindigkeit v_{Gr_U} durch den berechneten Geschwindigkeitsverlauf v_{F}(x_{FS}) beendet, wenn anhand des Höhenprofils des vorausliegenden Streckenabschnitts und/oder des daraus berechneten Geschwindigkeitsverlaufs v_{F}(x_{FS}) ein Berganstieg oder das Ende einer Senke erkannt wird.

Ebenso kann eine zu niedrige oder zu hohe Fahrgeschwindigkeit nach der Beendigung des Segelbetriebs dadurch verhindert werden, dass der Segelbetrieb schon vor dem Erreichen der unteren Grenzgeschwindigkeit v_{Gr_U} oder der oberen Grenzgeschwindigkeit v_{Gr_O} durch den berechneten Geschwindigkeitsverlauf v_{F}(x_{FS}) beendet wird, wenn der Schnittgradient dv_{F}/dt des berechneten Geschwindigkeitsverlaufs v_{F}(x_{FS}), d.h. der Gradient des berechneten Geschwindigkeitsverlaufs v_{F}(x_{FS}) bei Erreichen der unteren Grenzgeschwindigkeit v_{Gr_U} oder der oberen Grenzgeschwindigkeit v_{Gr_O}, einen festgelegten Verzögerungsgrenzwert (dv_{F}/dt)_{Max_U} unterschreitet oder einen festgelegten Beschleunigungsgrenzwert (dv_{F}/dt)_{Max_O} überschreitet.

Bei einem aufgrund des berechneten Geschwindigkeitsverlaufs v_{F}(x_{FS}) zu erwartenden Segelbetrieb, der sich über mehr als eine festgelegte Referenzanzahl n_{X_Ref} aufeinanderfolgender Wegpunkte erstreckt, wird das Fahrgetriebe zur Reduzierung des Schleppmomentes des Antriebsstrangs vorteilhaft zu Beginn des Segelbetriebs in Neutral geschaltet.

Abweichend davon wird bei einem zu erwartenden Segelbetrieb, der sich über weniger als die festgelegte Referenzanzahl n_{X_Ref} aufeinanderfolgender Wegpunkte erstreckt, zur Beschleunigung des Steuerungsablaufs zur Beendigung des Segelbetriebs vorteilhaft nur die Trennkupplung zu Beginn des Segelbetriebs geöffnet.

Zur Ermöglichung eines vorausschauenden Steuerungsablaufs des Segelbetriebs wird der berechnete Geschwindigkeitsverlauf v_{F}(x_{FS}) jeweils für einen vorausliegenden Streckenabschnitt von beispielsweise 300 Meter bis 500 Meter, vorzugsweise für einen vorausliegenden Streckenabschnitt von 400 Meter ermittelt.

Um hierbei eine hinreichende Genauigkeit des berechneten Geschwindigkeitsverlaufs v_{F}(x_{FS}) und eine schnelle sowie zugleich zuverlässige Bewertungsbasis zu erreichen, wird die Ermittlung des berechneten Geschwindigkeitsverlaufs v_{F}(x_{FS}) beispielsweise in einem äquidistanten Fahrstreckenabstand zwischen 3 Meter und 5 Meter, vorzugsweise in einem Fahrstreckenabstand von 4 Meter wiederholt.

Zur weiteren Verdeutlichung der Erfindung ist der Beschreibung eine Zeichnung mit Ausführungsbeispielen beigefügt. In dieser zeigt
- Fig. 1: einen Neigungsverlauf eines vorausliegenden Streckenabschnitts (Fig. 1a) und einen daraus berechneten Geschwindigkeitsverlauf (Fig. 1b) mit einem ersten Bewertungskriterium zur Freigabe eines Segelbetriebs,
- Fig. 2: einen Neigungsverlauf eines vorausliegenden Streckenabschnitts mit einer Geschwindigkeitsbegrenzung (Fig. 2a) und einen daraus berechneten Geschwindigkeitsverlauf (Fig. 2b),
- Fig. 3: einen Neigungsverlauf eines vorausliegenden Streckenabschnitts (Fig. 3a) und einen daraus berechneten Geschwindigkeitsverlauf (Fig. 3b) mit einem zweiten Bewertungskriterium zur Freigabe eines Segelbetriebs,
- Fig. 4: einen Neigungsverlauf eines vorausliegenden Streckenabschnitts (Fig. 4a) und einen daraus berechneten Geschwindigkeitsverlauf (Fig. 4b) mit einem dritten Bewertungskriterium zur Freigabe eines Segelbetriebs,
- Fig. 5: einen Neigungsverlauf eines vorausliegenden Streckenabschnitts (Fig. 5a) und einen daraus berechneten Geschwindigkeitsverlauf (Fig. 5b) mit einem vierten Bewertungskriterium zur Freigabe eines Segelbetriebs, und
- Fig. 6: einen Neigungsverlauf eines vorausliegenden Streckenabschnitts (Fig. 6a) mit einer Senke und einen daraus berechneten Geschwindigkeitsverlauf (Fig. 6b) mit einem Kriterium zur Beendigung eines Segelbetriebs.

Die wesentlichen Merkmale des erfindungsgemäßen Verfahrens zur Freigabe und Beendigung eines Segelbetriebs eines Kraftfahrzeugs werden nachfolgend anhand von Diagrammen erläutert, die jeweils in Teil a) einen aus topographischen Höhendaten eines dem Kraftfahrzeug vorausliegenden Streckenabschnitts ermittelten Verlauf der Fahrbahnneigung α_{FB}(x_{FS}) und in Teil b) einen daraus berechneten Geschwindigkeitsverlauf v_{F}(x_{FS}) enthalten, wobei die aktuelle Position des Kraftfahrzeugs jeweils bei x_{FS} = 0 liegt.

Die Höhendaten des vorausliegenden Streckenabschnitts werden fortlaufend, vorliegend beispielhaft im Abstand von 4 Metern, für einen 400 Meter vor dem Kraftfahrzeug befindlichen Wegpunkt erfasst, was z.B. in Verbindung mit der Ortung der aktuellen Fahrzeugposition mittels eines Satellitenortungssystems (GPS, Galileo) durch das Auslesen der entsprechenden Höhendaten aus einer digitalen Straßenkarte erfolgen kann. Somit stehen zusammen mit den zuvor erfassten Höhendaten insgesamt jeweils 100 Höhendaten für einen vorausliegenden Streckenabschnitt von 400 Metern zur Verfügung, aus denen in an sich bekannter Weise der Verlauf der Fahrbahnneigung α_{FB}(x_{FS}) ermittelt und daraus mit der aktuellen Fahrgeschwindigkeit v_{F}(0), der Fahrzeugmasse, dem Rollwiderstandsbeiwert und dem Luftwiderstandsbeiwert des Fahrzeugs unter der Annahme eines sofortigen Öffnens des Antriebsstrangs der Geschwindigkeitsverlauf v_{F}(x_{FS}) im Segelbetrieb berechnet und jedem vorausliegenden Streckenpunkt zugeordnet wird.

Die so fortlaufend ermittelten Geschwindigkeitsverläufe v_{F}(x_{FS}) werden jeweils in Bezug auf eine untere Grenzgeschwindigkeit v_{Gr_U} und eine obere Grenzgeschwindigkeit v_{Gr_O} im Hinblick auf eine Freigabe eines Segelbetriebs bewertet, die in den Figuren als strichpunktierte Linien eingezeichnet sind. Der Segelbetrieb wird jedoch nur dann freigegeben, wenn das Bewertungsergebnis bei einer festgelegten Mindestanzahl n_{X_Min} aufeinanderfolgender Wegpunkte jeweils positiv ist. Hierdurch wird erreicht, dass die auf teilweise ungenauen oder ganz fehlenden Höhendaten beruhende Berechnung des Geschwindigkeitsverlaufs v_{F}(x_{FS}) nur dann zu einer Freigabe des Segelbetriebs führt, wenn dieser mit hoher Wahrscheinlichkeit über eine gewisse Fahrstrecke oder Fahrzeit beibehalten werden kann und somit wirtschaftlich sinnvoll ist.

Die für die Bewertung der berechneten Geschwindigkeitsverläufe v_{F}(x_{FS}) verwendeten Grenzgeschwindigkeiten v_{Gr_U}, v_{Gr_O} werden zweckmäßig im Fahrpedalbetrieb in Relation zur aktuellen Fahrgeschwindigkeit v_{F}(0) (v_{Gr_U} = v_{F}(0) - Δv_{U}, v_{Gr_O} = v_{F}(0) + Δv_{O}) und im Tempomatbetrieb als die Motormomentanforderungsgeschwindigkeit (v_{Gr_U}) bzw. die Bremsmomentanforderungsgeschwindigkeit (v_{Gr_O}) des Tempomaten festgelegt.

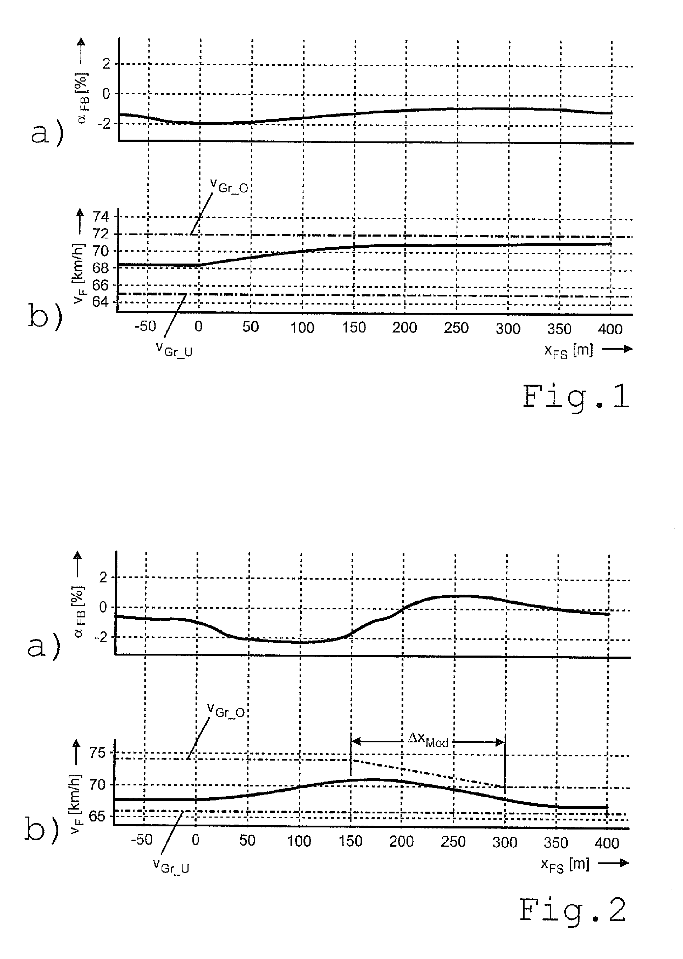

In Fig. 1 ist nun ein Verlauf der Fahrbahnneigung α_{FB}(x_{FS}) und ein daraus berechneter Geschwindigkeitsverlauf v_{F}(x_{FS}) abgebildet, bei denen die Fahrgeschwindigkeit v_{F}(x_{FS}) über den gesamten vorausliegenden Streckenabschnitt (x_{FS} = 0 - 400 Meter) innerhalb des von den Grenzgeschwindigkeiten v_{Gr_U}, v_{Gr_O} begrenzten Geschwindigkeitsfensters bleibt, was zu einem positiven Bewertungsergebnis führt.

In Fig. 2 ist beispielhaft veranschaulicht, dass die Grenzgeschwindigkeiten v_{Gr_U}, v_{Gr_O} über den vorausliegenden Streckenabschnitt nicht zwangsläufig konstant sein müssen. Vorliegend beginnt innerhalb des vorausliegenden Streckenabschnitts bei 300 Meter vor dem Kraftfahrzeug eine Geschwindigkeitsbegrenzung auf 70 km/h. Eine entsprechende Information kann z.B. einer digitalen Straßenkarte entnommen oder durch eine Erkennung des betreffenden Verkehrsschildes mittels einer Umfeldüberwachungseinrichtung erfasst werden. Zur Anpassung des Verfahrens wird die obere Grenzgeschwindigkeit v_{Gr_O} über eine Anpassungsstrecke Δx_{Mod} von 150m vor dem Beginn der Geschwindigkeitsbegrenzung linear auf die Höhe der Geschwindigkeitsbegrenzung von 70 km/h abgesenkt. Da die Fahrgeschwindigkeit v_{F}(x_{FS}) in diesem Beispiel auch über den gesamten vorausliegenden Streckenabschnitt (x_{FS} = 0 - 400 Meter) innerhalb des von den Grenzgeschwindigkeiten v_{Gr_U}, v_{Gr_O} begrenzten Geschwindigkeitsfensters bleibt, ist das Bewertungsergebnis auch in diesem Fall positiv.

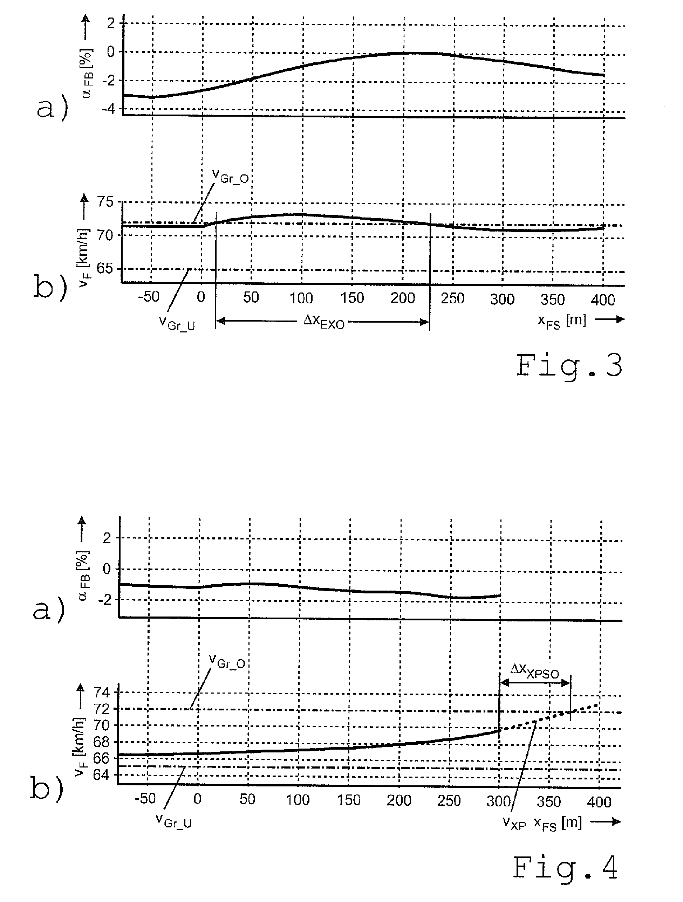

In Fig. 3 überschreitet der berechnete Geschwindigkeitsverlauf (v_{F}(x_{FS})) innerhalb des vorausliegenden Streckenabschnitts die obere Grenzgeschwindigkeit v_{Gr_O} und unterschreitet sie wieder nach einer Überschreitungsteilstrecke Δx_{EXO}. Ein derartiger Geschwindigkeitsverlauf ist typisch für das Durchfahren einer leichten Senke, in der ein Segelbetrieb trotz Überschreitung der oberen Grenzgeschwindigkeit v_{Gr_O} sinnvoll sein kann. Daher ist das Bewertungsergebnis des berechneten Geschwindigkeitsverlaufs (v_{F}(x_{FS})) in diesem Fall auch positiv, sofern die Überschreitung in nicht mehr als einer vorgegebenen tolerierbaren Anzahl n_{X_Tol_O} aufeinanderfolgender Wegpunkte auftritt und innerhalb einer vorgegebenen tolerierbaren Geschwindigkeitsdifferenz Δv_{Tol_O} liegt.

In Fig. 4 erstrecken sich der Verlauf der Fahrbahnneigung α_{FB}(x_{FS}) und der daraus berechnete Geschwindigkeitsverlauf v_{F}(x_{FS}) nur auf einen vorausliegenden Streckenabschnitt von 300 Meter, z.B. weil weitere Topographiedaten ungenau oder nicht vorhanden sind. In diesem Fall wird der berechnete Geschwindigkeitsverlauf (v_{F}(x_{FS})) über den letzten Wegpunkt des vorausliegenden Streckenabschnitts hinaus linear extrapoliert, bis der extrapolierte Geschwindigkeitsverlauf v_{XP}(x_{FS}) aufgrund des positiven Gradienten die obere Grenzgeschwindigkeit v_{Gr_O} nach einer extrapolierten Teilstrecke Δx_{XPSO} erreicht bzw. überschreitet. Wenn dies unterhalb einer festgelegten Mindestanzahl n_{XP_Min_O} aufeinanderfolgender Wegpunkte erfolgt, ist das Bewertungsergebnis des berechneten Geschwindigkeitsverlaufs v_{XP}(x_{FS}) ebenfalls positiv.

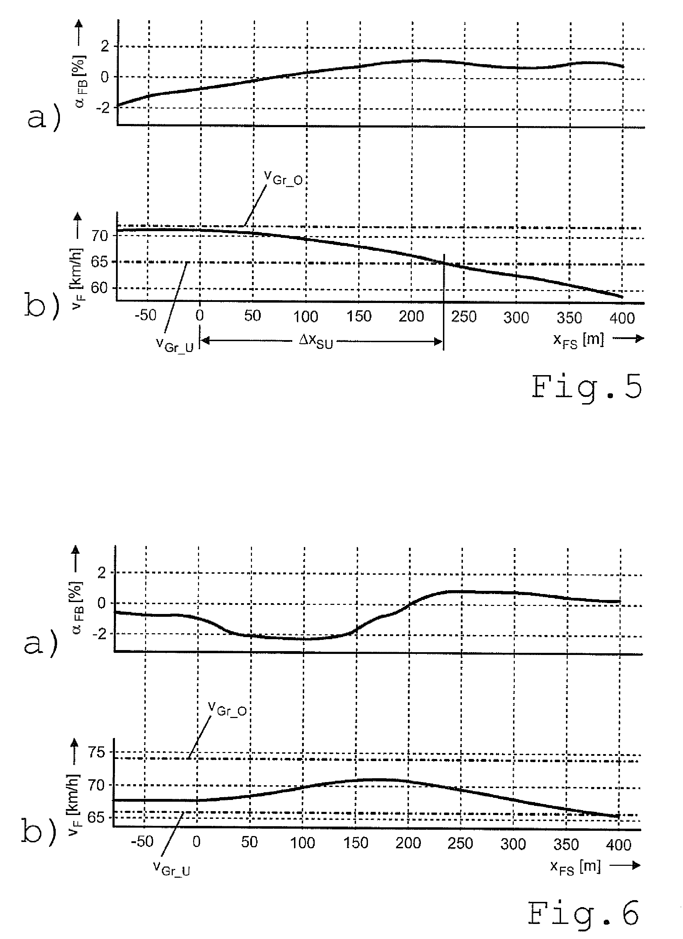

In Fig. 5 wird dagegen ein relativ stark ansteigender Verlauf der Fahrbahnneigung a_{FB}(x_{FS}) vorausschauend ermittelt, der zu einem relativ schnellen Abfall des berechneten Geschwindigkeitsverlaufs v_{F}(x_{FS}) und zu einem Erreichen oder Unterschreiten der unteren Grenzgeschwindigkeit v_{Gr_U} nach einer Teilstrecke Δx_{SU} von etwa 230 Meter führen wird. Wenn dies jedoch erst oberhalb einer festgelegten Mindestanzahl n_{X_Min_U} aufeinanderfolgender Wegpunkte erfolgt, d.h. die Teilstrecke Δx_{SU} für einen Segelbetrieb hinreichend lang ist, wird der berechnete Geschwindigkeitsverlauf v_{XP}(x_{FS}) auch in diesem Fall positiv bewertet.

In Fig. 6 sind der für eine Senke typische Verlauf der Fahrbahnneigung α_{FS}(x_{FS}) und der daraus berechnete Geschwindigkeitsverlauf v_{F}(x_{FS}) abgebildet. Zur besseren Nutzung der kinetischen Energie des Kraftfahrzeugs wird die Mindestanzahl aufeinanderfolgender Wegpunkte n_{X_Min} zur Freigabe des Segelbetriebs vorteilhaft reduziert, wenn anhand des Höhenprofils des vorausliegenden Streckenabschnitts und/oder des daraus berechneten Geschwindigkeitsverlaufs v_{F}(x_{FS}) ein Gefälleauslauf oder der Beginn einer Senke erkannt wird. Dies führt zu einer früheren Einleitung des Segelbetriebs. Zur Erzielung einer höheren Fahrgeschwindigkeit in einer Steigung ist vorgesehen, dass der Segelbetrieb schon vor dem Erreichen der unteren Grenzgeschwindigkeit v_{Gr_U} durch den berechneten Geschwindigkeitsverlauf v_{F}(x_{FS}) beendet wird, wenn anhand des Höhenprofils des vorausliegenden Streckenabschnitts und/oder des daraus berechneten Geschwindigkeitsverlaufs v_{F}(x_{FS}) ein Berganstieg oder das Ende einer Senke erkannt wird.

### Bezugszeichen

- n_{X_Min}: Mindestanzahl von Wegpunkten
- n_{X_Min_O}: Mindestanzahl von Wegpunkten
- n_{X_Min_U}: Mindestanzahl von Wegpunkten
- n_{X_Ref}: Referenzanzahl von Wegpunkten
- n_{XP_Min_O}: Mindestanzahl von Wegpunkten
- n_{XP_Min_U}: Mindestanzahl von Wegpunkten
- v_{F}: Fahrgeschwindigkeit
- v_{F}(0): Aktuelle Fahrgeschwindigkeit
- v_{F}(x_{FS}): Berechneter Geschwindigkeitsverlauf
- v_{XP}(x_{FS}): Extrapolierter Geschwindigkeitsverlauf
- v_{Gr_O}: Obere Grenzgeschwindigkeit
- v_{Gr_U}: Untere Grenzgeschwindigkeit
- v_{Lim}: Geschwindigkeitsbegrenzung
- x_{FS}: Fahrstrecke
- α_{FB}: Fahrbahnneigung
- Δv_{O}: Obere Geschwindigkeitsdifferenz
- Δv_{U}: Untere Geschwindigkeitsdifferenz
- Δv_{Tol_O}: Tolerierbare Geschwindigkeitsdifferenz
- Δv_{Tol_U}: Tolerierbare Geschwindigkeitsdifferenz
- Δx_{Mod}: Anpassungsstrecke
- Δx_{EXO}: Teilstrecke mit Überschreitung von v_{Gr_O}
- Δx_{SU}: Teilstrecke bis Unterschreitung von v_{Gr_U}
- Δx_{XPSO}: Extrapolierte Teilstrecke bis Überschreitung von v_{Gr_O}
- dv_{F}/dt: Gradient der Fahrgeschwindigkeit
- (dv_{F}/dt)_{Max_O}: Beschleunigungsgrenzwert
- (dv_{F}/dt)_{Max_U}: Verzögerungsgrenzwert

## Patentansprüche

1. Verfahren zur Fahrbetriebssteuerung eines Kraftfahrzeugs, dessen Antriebsstrang weitgehend automatisiert ist und einen als Verbrennungsmotor ausgebildeten Antriebsmotor, ein stufenweise oder stufenlos verstellbares Fahrgetriebe sowie mindestens eine zwischen dem Antriebsmotor und dem Fahrgetriebe angeordnete Trennkupplung aufweist, wobei während einer Fahrt bei Vorliegen bestimmter Betriebsbedingungen und eines geeigneten, anhand von Topographiedaten und Fahrzeugparametern für einen vorausliegenden Streckenabschnitt berechneten Geschwindigkeitsverlaufs (v_{F}(x_{FS})) der Antriebsstrang geöffnet und die Fahrt bis zum Auftreten eines Abbruchsignals im Segelbetrieb fortgesetzt wird, **dadurch gekennzeichnet, dass** der für den Fall eines sofortigen Öffnens des Antriebsstrangs berechnete Geschwindigkeitsverlauf (v_{F}(x_{FS})) fortlaufend an äquidistant aufeinanderfolgenden Wegpunkten der Fahrstrecke (x_{FS}) ermittelt und jeweils in Bezug auf eine untere Grenzgeschwindigkeit (v_{Gr_U}) und eine obere Grenzgeschwindigkeit (v_{Gr_O}) bewertet wird, und dass der Segelbetrieb nur dann freigegeben wird, wenn das Bewertungsergebnis bei einer festgelegten Mindestanzahl (n_{X_Min}) aufeinanderfolgender Wegpunkte jeweils positiv ist.

2. Verfahren nach Anspruch 1, **dadurch gekennzeichnet, dass** die Mindestanzahl (n_{X_Min}) aufeinanderfolgender Wegpunkte zur Freigabe des Segelbetriebs in Abhängigkeit vom Höhenprofil des vorausliegenden Streckenabschnitts und/oder des dafür berechneten Geschwindigkeitsverlaufs (v_{F}(x_{FS})) variabel bestimmt wird.

3. Verfahren nach Anspruch 2, **dadurch gekennzeichnet, dass** die Mindestanzahl aufeinanderfolgender Wegpunkte (n_{X_Min}) zur Freigabe des Segelbetriebs ausgehend von einem Standardwert reduziert wird, wenn anhand des Höhenprofils des vorausliegenden Streckenabschnitts und/oder des daraus berechneten Geschwindigkeitsverlaufs (v_{F}(x_{FS})) ein Gefälleauslauf oder der Beginn einer Senke erkannt wird.

4. Verfahren nach einem der Ansprüche 1 bis 3, **dadurch gekennzeichnet, dass** im Fahrpedalbetrieb eine um eine festgelegte untere Geschwindigkeitsdifferenz (Δv_{U}) unter der aktuellen Fahrgeschwindigkeit (v_{F}(0)) liegende Geschwindigkeit als untere Grenzgeschwindigkeit (v_{Gr_U} = v_{F}(0) - Δv_{U}) und eine um eine festgelegte obere Geschwindigkeitsdifferenz (Δv_{O}) über der aktuellen Fahrgeschwindigkeit (V_{F}(0)) liegende Geschwindigkeit als obere Grenzgeschwindigkeit (v_{Gr_O} = v_{F}(0) + Δv_{O}) verwendet wird.

5. Verfahren nach einem der Ansprüche 1 bis 4, **dadurch gekennzeichnet, dass** im Tempomatbetrieb diejenige Geschwindigkeit, bei welcher der Tempomat ein Motormoment anfordern würde, als untere Grenzgeschwindigkeit (v_{Gr_U}) und diejenige Geschwindigkeit, bei welcher der Tempomat ein Bremsmoment anfordern würde, als obere Grenzgeschwindigkeit (v_{Gr_O}) verwendet wird.

6. Verfahren nach einem der Ansprüche 1 bis 5, **dadurch gekennzeichnet, dass** zumindest die obere Grenzgeschwindigkeit (v_{Gr_O}) über eine festgelegte Anpassungsstrecke (Δx_{Mod}) stetig auf eine Geschwindigkeitsbegrenzung (v_{Lim}) abgesenkt wird, wenn diese unterhalb der oberen Grenzgeschwindigkeit liegt (v_{Lim} < v_{Gr_O}) und innerhalb des vorausliegenden Streckenabschnitts beginnt.

7. Verfahren nach einem der Ansprüche 1 bis 6, **dadurch gekennzeichnet, dass** das Bewertungsergebnis positiv ist, wenn der berechnete Geschwindigkeitsverlauf (v_{F}(x_{FS})) innerhalb des vorausliegenden Streckenabschnitts die untere Grenzgeschwindigkeit (v_{Gr_U}) nicht unterschreitet und die obere Grenzgeschwindigkeit (v_{Qr_O}) nicht überschreitet.

8. Verfahren nach einem der Ansprüche 1 bis 7, **dadurch gekennzeichnet, dass** das Bewertungsergebnis positiv ist, wenn der berechnete Geschwindigkeitsverlauf (v_{F}(x_{FS})) innerhalb des vorausliegenden Streckenabschnitts die untere Grenzgeschwindigkeit (v_{Gr_U}) unterschreitet und anschließend wieder überschreitet, sofern die Unterschreitung in nicht mehr als einer vorgegebenen tolerierbaren Anzahl (n_{X_Tol_U}) aufeinanderfolgender Wegpunkte auftritt und innerhalb einer vorgegebenen tolerierbaren Geschwindigkeitsdifferenz (ΔV_{Tol_U}) liegt.

9. Verfahren nach einem der Ansprüche 1 bis 8, **dadurch gekennzeichnet, dass** das Bewertungsergebnis positiv ist, wenn der berechnete Geschwindigkeitsverlauf (v_{F}(x_{FS})) innerhalb des vorausliegenden Streckenabschnitts die obere Grenzgeschwindigkeit (v_{Gr_O}) überschreitet und anschließend wieder unterschreitet, sofern die Überschreitung in nicht mehr als einer vorgegebenen tolerierbaren Anzahl (n_{X_Tol_O}) aufeinanderfolgender Wegpunkte auftritt und innerhalb einer vorgegebenen tolerierbaren Geschwindigkeitsdifferenz (Δv_{Tol_O}) liegt.

10. Verfahren nach einem der Ansprüche 1 bis 9, **dadurch gekennzeichnet, dass** das Bewertungsergebnis positiv ist, wenn bei einem negativen Gradienten des berechneten Geschwindigkeitsverlaufs (v_{F}(x_{FS})) am Ende des vorausliegenden Streckenabschnitts der über den letzten Wegpunkt des vorausliegenden Streckenabschnitts hinaus linear extrapolierte Geschwindigkeitsverlauf (v_{XP}(x_{FS})) die untere Grenzgeschwindigkeit (v_{Gr_U}) oberhalb einer festgelegten Mindestanzahl (n_{xP_Min_U}) aufeinanderfolgender Wegpunkte überschreitet.

11. Verfahren nach einem der Ansprüche 1 bis 10, **dadurch gekennzeichnet, dass** das Bewertungsergebnis positiv ist, wenn bei einem positiven Gradienten des berechneten Geschwindigkeitsverlaufs (v_{F}(x_{FS})) am Ende des vorausliegenden Streckenabschnitts der über den letzten Wegpunkt des betrachteten Streckenabschnitts hinaus linear extrapolierte Geschwindigkeitsverlauf (v_{XP}(x_{FS})) die obere Grenzgeschwindigkeit (v_{Gr_O}) oberhalb einer festgelegten Mindestanzahl (n_{XP_Min_O}) aufeinanderfolgender Wegpunkte überschreitet.

12. Verfahren nach einem der Ansprüche 1 bis 11, **dadurch gekennzeichnet, dass** das Bewertungsergebnis positiv ist, wenn der berechnete Geschwindigkeitsverlauf (v_{F}(x_{FS})) innerhalb des vorausliegenden Streckenabschnitts die untere Grenzgeschwindigkeit (v_{Gr_U}) oberhalb einer festgelegten Mindestanzahl (n_{X_Min_U}) aufeinanderfolgender Wegpunkte unterschreitet.

13. Verfahren nach einem der Ansprüche 1 bis 12, **dadurch gekennzeichnet, dass** das Bewertungsergebnis positiv ist, wenn der berechnete Geschwindigkeitsverlauf (v_{F}(x_{FS})) innerhalb des vorausliegenden Streckenabschnitts die obere Grenzgeschwindigkeit (v_{Gr_O}) oberhalb einer festgelegten Mindestanzahl (n_{X_Min_O}) aufeinanderfolgender Wegpunkte unterschreitet.

14. Verfahren nach wenigstens einem der Ansprüche 1 bis 13, **dadurch gekennzeichnet, dass** der Segelbetrieb unter normalen Betriebsbedingungen bei Erreichen der unteren Grenzgeschwindigkeit (v_{Gr_U}) oder der oberen Grenzgeschwindigkeit (v_{Gr_O}) durch die aktuelle Fahrgeschwindigkeit (v_{F}) oder durch den berechneten Geschwindigkeitsverlauf (v_{F}(x_{FS})) beendet wird.

15. Verfahren nach einem der Ansprüche 1 bis 14, **dadurch gekennzeichnet, dass** der Segelbetrieb schon vor dem Erreichen der unteren Grenzgeschwindigkeit (v_{Gr_U}) durch den berechneten Geschwindigkeitsverlauf (v_{F}(x_{FS})) beendet wird, wenn anhand des Höhenprofils des vorausliegenden Streckenabschnitts und/oder des daraus berechneten Geschwindigkeitsverlaufs (v_{F}(x_{FS})) ein Berganstieg oder das Ende einer Senke erkannt wird.

16. Verfahren nach einem der Ansprüche 1 bis 15, **dadurch gekennzeichnet, dass** der Segelbetrieb schon vor dem Erreichen der unteren Grenzgeschwindigkeit (v_{Gr_U}) oder der oberen Grenzgeschwindigkeit (v_{Gr_O}) durch den berechneten Geschwindigkeitsverlauf (v_{F}(x_{FS})) beendet wird, wenn der Schnittgradient (dv_{F}/dt) des berechneten Geschwindigkeitsverlaufs (v_{F}(x_{FS})) einen festgelegten Verzögerungsgrenzwert ((dv_{F}/dt)_{Max_U}) unterschreitet oder einen festgelegten Beschleunigungsgrenzwert ((dv_{F}/dt)_{Max_O}) überschreitet.

17. Verfahren nach einem der Ansprüche 1 bis 16, **dadurch gekennzeichnet, dass** bei einem aufgrund des berechneten Geschwindigkeitsverlaufs (v_{F}(x_{FS})) zu erwartenden Segelbetrieb, der sich über mehr als eine festgelegte Referenzanzahl (n_{X_Ref}) aufeinanderfolgender Wegpunkte erstreckt, das Fahrgetriebe zu Beginn des Segelbetriebs in Neutral geschaltet wird, wogegen bei einem zu erwartenden Segelbetrieb, der sich über weniger als die festgelegte Referenzanzahl (n_{X_Ref}) aufeinanderfolgender Wegpunkte erstreckt, nur die Trennkupplung zu Beginn des Segelbetriebs geöffnet wird.

18. Verfahren nach einem der Ansprüche 1 bis 17, **dadurch gekennzeichnet, dass** der berechnete Geschwindigkeitsverlauf (v_{F}(x_{FS})) jeweils für einen vorausliegenden Streckenabschnitt von 300 Meter bis 500 Meter oder für einen vorausliegenden Streckenabschnitt von 400 Meter ermittelt wird.

19. Verfahren nach einem der Ansprüche 1 bis 18, **dadurch gekennzeichnet, dass** die Ermittlung des berechneten Geschwindigkeitsverlaufs (v_{F}(x_{FS})) in einem äquidistanten Fahrstreckenabstand zwischen 3 Meter und 5 Meter, vorzugsweise in einem Fahrstreckenabstand von 4 Meter wiederholt wird.

## Claims

1. Method for controlling the driving mode of a motor vehicle, the drive train of which is largely automated, and a drive engine which is embodied as an internal combustion engine, a transmission which can be adjusted incrementally or in an infinitely variable fashion and at least one clutch which is arranged between the drive engine and the transmission, wherein during travel the drive train is opened when certain operating conditions are present and there is a suitable speed profile (v_{F}(x_{FS})) which is calculated on the basis of topography data and vehicle parameters for a route section lying ahead and the travel is continued until an abort signal occurs in the coasting mode, **characterized in that** the speed profile (v_{F}(x_{FS})) which is calculated for the event of immediate opening of the drive train is continuously determined at equidistantly successive points along the route of the distance travelled (x_{FS}) and is evaluated in each case with respect to a lower limiting speed (v_{Gr_U}) and an upper limiting speed (v_{Gr_O}), and **in that** the coasting mode is enabled only when the evaluation result is respectively positive given a defined minimum number (n_{X_Min}) of successive points along the route.

2. Method according to Claim 1, **characterized in that** the minimum number (n_{X_Min}) of successive points along the route is determined in a variable fashion in order to enable the coasting mode as a function of the altitude profile of the route section lying ahead and/or of the speed profile (v_{F}(x_{FS})) calculated for it.

3. Method according to Claim 2, **characterized in that** the minimum number of successive points along the route (n_{X_Min}) is reduced starting from a standard value in order to enable the coasting mode if a negative gradient of run-out or the start of a depression is detected on the basis of the altitude profile of the route section lying ahead and/or the speed profile (v_{F}(X_{FS})) calculated therefrom.

4. Method according to one of Claims 1 to 3, **characterized in that** in the accelerator pedal mode a speed lying below the current velocity (v_{F}(0)) by a defined lower speed difference (Δv_{U}) is used as the lower limiting speed (v_{Gr_U} = v_{F}(0)-Δv_{U}) and a speed lying above the current velocity (v_{F}(0)) by a defined upper speed difference (Δv_{O}) is used as the upper limiting speed (v_{Gr_O} = v_{F}(0)-Δv_{O}).

5. Method according to one of Claims 1 to 4, **characterized in that** in the cruise control mode that speed at which the cruise controller would request an engine torque is used as the lower limiting speed (v_{Gr_U}) and that speed at which the cruise controller would request a braking torque is used as the upper limiting speed (v_{Gr_O}).

6. Method according to one of Claims 1 to 5, **characterized in that** at least the upper limiting speed (v_{Gr_O}) is constantly reduced to a speed limit (v_{Lim}) over a defined adaptation distance (Δx_{Mod}) if said speed limit (v_{Lim}) is below the upper limiting speed (v_{Lim} < v_{Gr_O}) and starts within the route section lying ahead.

7. Method according to one of Claims 1 to 6, **characterized in that** the evaluation result is positive if the calculated speed profile (v_{F}(x_{FS})) within the route section lying ahead does not undershoot the lower limiting speed (v_{Gr_U}) and does not exceed the upper limiting speed (v_{Gr_O}).

8. Method according to one of Claims 1 to 7, **characterized in that** the evaluation result is positive if the calculated speed profile (v_{F}(x_{FS})) within the route section lying ahead undershoots the lower limiting speed (v_{Gr_U}) and subsequently exceeds it again if the undershooting occurs in not more than one predefined tolerable number (n_{X_Tol_U}) of successive points along the route and is within a predefined tolerable speed difference (Δv_{Tol_U}).

9. Method according to one of Claims 1 to 8, **characterized in that** the evaluation result is positive if the calculated speed profile (v_{F}(x_{FS})) within the route section lying ahead exceeds the upper limiting speed (v_{Gr_O}) and subsequently undershoots it again if the upward transgression occurs in not more than predefined tolerable number (n_{X_Tol_O}) of successive points along the route and is within a predefined tolerable speed difference (Δv_{Tol_O}).

10. Method according to one of Claims 1 to 9, **characterized in that** the evaluation result is positive if given a negative gradient of the calculated speed profile (v_{F}(x_{FS})) at the end of the route section lying ahead the speed profile (v_{XP}(x_{FS})) which is extrapolated linearly over and beyond the last point along the route section lying ahead exceeds the lower limiting speed (v_{Gr_U}) above a defined minimum number (n_{XP_Min_U}) of successive points along the route.

11. Method according to one of Claims 1 to 10, **characterized in that** the evaluation result is positive if given a positive gradient of the calculated speed profile (v_{F}(x_{FS})) at the end of the route section lying ahead the speed profile (v_{XP}(x_{FS})) which is extrapolated linearly over and beyond the last point along the route section lying ahead exceeds the upper limiting speed (v_{Gr_O}) above a defined minimum number (n_{XP_Min_O}) of successive points along the route.

12. Method according to one of Claims 1 to 11, **characterized in that** the evaluation result is positive if the calculated speed profile (v_{F}(x_{FS})) within the route section lying ahead undershoots the lower limiting speed (v_{Gr_U}) above a defined minimum number (n_{X_Min_U}) of successive points along the route.

13. Method according to one of Claims 1 to 12, **characterized in that** the evaluation result is positive if the calculated speed profile (v_{F}(x_{FS})) within the route section lying ahead undershoots the upper limiting speed (v_{Gr_O}) above a defined minimum number (n_{X_Min_O}) of successive points along the route.

14. Method according to at least one of Claims 1 to 13, **characterized in that** the coasting mode is ended under normal operating conditions when the lower limiting speed (v_{Gr_U}) or the upper limiting speed (v_{Gr_O}) is reached by the current velocity (v_{F}) or by the calculated speed profile (v_{F}(x_{FS})).

15. Method according to one of Claims 1 to 14, **characterized in that** the coasting mode is already ended before the lower limiting speed (v_{Gr_U}) is reached by the calculated speed profile (v_{F}(x_{FS})) if an uphill slope or the end of a depression is detected on the basis of the altitude profile of the route section lying ahead and/or the speed profile (v_{F}(x_{FS})) calculated therefrom.

16. Method according to one of Claims 1 to 15, **characterized in that** the coasting mode is already ended before the lower limiting speed (v_{Gr_U}) or the upper limiting speed (v_{Gr_O}) is reached by the calculated speed profile (v_{F}(x_{FS})) if the section gradient (dv_{F}/dt) of the calculated speed profile (v_{F}(x_{FS})) undershoots a defined deceleration limiting value ((dv_{F}/dt)_{Max_U}) or exceeds a defined acceleration limiting value ((dv_{F}/dt)_{Max_O}).

17. Method according to one of Claims 1 to 16, **characterized in that** in the case of a coasting mode which is to be expected on the basis of the calculated speed profile (v_{F}(x_{FS})) and which extends over more than an defined reference number (n_{X_Ref}) of successive points along the route, the transmission is shifted into neutral at the start of the coasting mode, whereas in the case of an expected coasting mode which extends over fewer than the defined reference number (n_{X_Ref}) of successive points along the route, only the clutch is opened at the start of the coasting mode.

18. Method according to one of Claims 1 to 17, **characterized in that** the calculated speed profile (v_{F}(x_{FS})) is determined in each case for a route section of 300 metres to 500 metres lying ahead or for a route section of 400 metres lying ahead.

19. Method according to one of Claims 1 to 18, **characterized in that** the determination of the calculated speed profile (v_{F}(x_{FS})) is repeated at an equidistant difference between distances travelled of between 3 metres and 5 metres, preferably at a difference between the distance travelled of 4 metres.

## Revendications

1. Procédé de commande du régime de conduite d'un véhicule automobile dont la chaîne cinématique est amplement automatisée et présente un moteur d'entraînement réalisé sous la forme d'un moteur à combustion interne, un mécanisme de translation à réglage par paliers ou continu ainsi qu'au moins un accouplement de séparation disposé entre le moteur d'entraînement et le mécanisme de translation, procédé selon lequel, pendant un déplacement en présence de conditions opérationnelles définies et d'une courbe de vitesse (v_{F}(x_{FS})) appropriée calculée à l'aide de données topographiques et de paramètres du véhicule pour une portion de trajet à venir, la chaîne cinématique est ouverte et le déplacement est poursuivi en régime sans moteur jusqu'à ce que survienne un signal d'interruption, **caractérisé en ce que** la courbe de vitesse (v_{F}(x_{FS})) calculée pour le cas d'une ouverture immédiate de la chaîne cinématique est déterminée continuellement au niveau de points de cheminement successifs de manière équidistante de l'itinéraire (x_{FS}) et évaluée respectivement en référence à une vitesse limite basse (v_{Gr_U}) et à une vitesse limite haute (v_{Gr_O}), et **en ce que** le régime sans moteur n'est validé que lorsque le résultat de l'évaluation est à chaque fois positif pour un nombre minimum (n_{X_Min}) donné de points de cheminement successifs.

2. Procédé selon la revendication 1, **caractérisé en ce que** le nombre minimum (n_{X_Min}) de points de cheminement successifs servant à valider le régime sans moteur est défini de manière variable en fonction du profil de hauteur de la portion de trajet à venir et/ou de la courbe de vitesse (v_{F}(x_{FS})) calculée à cet effet.

3. Procédé selon la revendication 2, **caractérisé en ce que** le nombre minimum (n_{X_Min}) de points de cheminement successifs servant à valider le régime sans moteur est réduit à partir d'une valeur par défaut si le profil de hauteur de la portion de trajet à venir et/ou la courbe de vitesse (v_{F}(x_{FS})) calculée à partir de celui-ci permettent d'identifier une sortie de pente ou le début d'une descente.

4. Procédé selon l'une des revendications 1 à 3, **caractérisé en ce qu'**en régime avec pédale des gaz, une vitesse qui se trouve au-dessous de la vitesse de déplacement actuelle (v_{F}(0)) d'une différence de vitesse basse (Δv_{U}) donnée est utilisée en tant que vitesse limite basse (v_{Gr_U} = v_{F} (0) - Δv_{U}) et une vitesse qui se trouve au-dessus de la vitesse de déplacement actuelle (v_{F}(0)) d'une différence de vitesse haute (Δv₀) donnée est utilisée en tant que vitesse limite haute (v_{Gr_0} = v_{F} (0) + Δv_{O}).

5. Procédé selon l'une des revendications 1 à 4, **caractérisé en ce qu'**en régime avec régulateur de vitesse, la vitesse à laquelle le régulateur de vitesse solliciterait un couple moteur est utilisée en tant que vitesse limite basse (v_{Gr_U}) et la vitesse à laquelle le régulateur de vitesse solliciterait un moment de freinage est utilisée en tant que vitesse limite haute (V_{Gr_O}).

6. Procédé selon l'une des revendications 1 à 5, **caractérisé en ce qu'**au moins la vitesse limite haute (v_{Gr_O}) est constamment abaissée à une limitation de vitesse (v_{Lim}) sur un trajet d'adaptation (Δx_{Mod}) donné lorsque celle-ci se trouve au-dessous de la vitesse limite haute (_{VLim} < v_{Gr_O}) et commence à l'intérieur de la portion de trajet à venir.

7. Procédé selon l'une des revendications 1 à 6, **caractérisé en ce que** le résultat de l'évaluation est positif lorsque la courbe de vitesse (v_{F}(x_{FS})) calculée à l'intérieur de la portion de trajet à venir ne devient pas inférieure à la vitesse limite basse (v_{Gr_U}) et ne devient pas supérieure à la vitesse limite haute (v_{Gr_O}).

8. Procédé selon l'une des revendications 1 à 7, **caractérisé en ce que** le résultat de l'évaluation est positif lorsque la courbe de vitesse (v_{F}(x_{FS})) calculée à l'intérieur de la portion de trajet à venir devient inférieure à la vitesse limite basse (v_{Gr_U}) et devient ensuite de nouveau supérieure à celle-ci, sous réserve qu'elle ne reste pas inférieure à celle-ci sur plus qu'un nombre tolérable (n_{X_Tol_U}) prédéfini de points de cheminement successifs et se trouve à l'intérieur d'une différence de vitesse tolérable (Δv_{Tol_D}) prédéfinie.

9. Procédé selon l'une des revendications 1 à 8, **caractérisé en ce que** le résultat de l'évaluation est positif lorsque la courbe de vitesse (v_{F}(x_{FS})) calculée à l'intérieur de la portion de trajet à venir devient supérieure à la vitesse limite haute (v_{Gr_O}) et devient ensuite de nouveau inférieure à celle-ci, sous réserve qu'elle ne reste pas supérieure à celle-ci sur plus qu'un nombre tolérable (n_{X_Tol_O}) prédéfini de points de cheminement successifs et se trouve à l'intérieur d'une différence de vitesse tolérable (Δv_{Tol_O}) prédéfinie.

10. Procédé selon l'une des revendications 1 à 9, **caractérisé en ce que** le résultat de l'évaluation est positif lorsque, en présence d'un gradient négatif de la courbe de vitesse (v_{F}(x_{FS})) calculée à la fin de la portion de trajet à venir, la courbe de vitesse (v_{XP}(x_{FS})) extrapolée linéairement au-delà du dernier point de cheminement de la portion de trajet à venir devient supérieure à la vitesse limite basse (v_{Gr_U}) sur plus d'un nombre minimum (n_{XP_Min_U}) donné de points de cheminement successifs.

11. Procédé selon l'une des revendications 1 à 10, **caractérisé en ce que** le résultat de l'évaluation est positif lorsque, en présence d'un gradient positif de la courbe de vitesse (v_{F}(x_{FS})) calculée à la fin de la portion de trajet à venir, la courbe de vitesse (v_{XP}(x_{FS})) extrapolée linéairement au-delà du dernier point de cheminement de la portion de trajet considérée devient supérieure à la vitesse limite haute (v_{Gr_O}) sur plus d'un nombre minimum (n_{XP_Min_O}) donné de points de cheminement successifs.

12. Procédé selon l'une des revendications 1 à 11, **caractérisé en ce que** le résultat de l'évaluation est positif lorsque la courbe de vitesse (v_{F}(x_{FS})) calculée à l'intérieur de la portion de trajet à venir devient inférieure à la vitesse limite basse (v_{Gr_U}) sur plus d'un nombre minimum (n_{X_Min U}) donné de points de cheminement successifs.

13. Procédé selon l'une des revendications 1 à 12, **caractérisé en ce que** le résultat de l'évaluation est positif lorsque la courbe de vitesse (v_{F}(x_{FS})) calculée à l'intérieur de la portion de trajet à venir devient inférieure à la vitesse limite haute (v_{Gr_O}) sur plus d'un nombre minimum (n_{X_Min_O}) donné de points de cheminement successifs.

14. Procédé selon au moins l'une des revendications 1 à 13, **caractérisé en ce que** le régime sans moteur, sous des conditions opérationnelles normales, prend fin lorsque la vitesse de déplacement (v_{F}) actuelle ou la courbe de vitesse (v_{F}(x_{FS})) calculée atteint la vitesse limite basse (v_{Gr_U}) ou la vitesse limite haute (v_{Gr_O}).

15. Procédé selon l'une des revendications 1 à 14, **caractérisé en ce que** le régime sans moteur prend déjà fin avant que la courbe de vitesse (v_{F}(x_{FS})) calculée n'atteigne la vitesse limite basse (v_{Gr_U}) si une montée ou la fin d'une descente est identifiée à l'aide du profil de hauteur de la portion de trajet à venir et/ou de la courbe de vitesse (v_{F}(x_{FS})) calculée à partir de celui-ci.

16. Procédé selon l'une des revendications 1 à 15, **caractérisé en ce que** le régime sans moteur prend déjà fin avant que la courbe de vitesse (v_{F}(x_{FS})) calculée n'atteigne la vitesse limite basse (v_{GR_U}) ou la vitesse limite haute (v_{Gr_O}) si le gradient de section (dv_{F}/dt) de la courbe de vitesse (v_{F}(x_{FS})) calculée devient inférieur à une valeur limite de ralentissement ((dv_{F}/dt)_{Max_U}) donnée ou devient supérieur à une valeur limite d'accélération ((dv_{F}/dt)_{Max_O}) donnée.

17. Procédé selon l'une des revendications 1 à 16, **caractérisé en ce que** dans le cas d'un régime sans moteur attendu du fait de la courbe de vitesse (v_{F}(x_{FS})) calculée qui s'étend sur un nombre de points de cheminement successifs supérieur à un nombre de référence (n_{X_Ref}) donné, le mécanisme de translation est basculé en position neutre au début du régime sans moteur, alors que dans le cas d'un régime sans moteur attendu qui s'étend sur moins que le nombre de référence (n_{X_Fef}) donné de points de cheminement successifs, seul l'accouplement de séparation est ouvert au début du régime sans moteur.

18. Procédé selon l'une des revendications 1 à 17, **caractérisé en ce que** la courbe de vitesse (v_{F}(x_{FS})) calculée est à chaque fois déterminée pour une portion de trajet à venir de 300 à 500 mètres ou pour une portion de trajet à venir de 400 mètres.

19. Procédé selon l'une des revendications 1 à 18, **caractérisé en ce que** la détermination de la courbe de vitesse (v_{F}(x_{FS})) calculée est répétée dans un intervalle d'itinéraire équidistant compris entre 3 mètres et 5 mètres, de préférence dans un intervalle d'itinéraire de 4 mètres.
